# EUROPÄISCHE PATENTSCHRIFT

(11) **EP 1 285 412 B1**
(45) Veröffentlichungstag und Bekanntmachung des Hinweises auf die Patenterteilung: **14.12.2005**
(21) Anmeldenummer: 01936256.5
(22) Anmeldetag: 20.04.2001
(51) Int. Cl.: G07F 7/06

(54) **VERFAHREN UND SYSTEM ZUM ERFASSEN UND BELOHNEN EINER RUECKFUEHRUNG VON EINKAUFSWAGEN**
METHOD AND SYSTEM FOR DETECTING AND REWARDING THE RETURNING OF SHOPPING CARTS
PROCEDE ET SYSTEME PERMETTANT DE DETECTER ET DE RECOMPENSER LE RETOUR DE CHARIOTS DE SUPERMARCHE

(30) Priorität: 20.04.2000 DE 10019941; 20.04.2000 DE 10019944; 20.04.2000 DE 10019942
(43) Veröffentlichungstag der Anmeldung: 26.02.2003
(73) Patentinhaber: systec POS-Technology GmbH, 82178 Puchheim (DE)
(72) Erfinder: WIETH, Franz, 82178 Puchheim (DE); SONNENDORFER, Horst, 82178 Puchheim (DE)
(86) Internationale Anmeldenummer: PCT/EP2001/004512
(87) Internationale Veröffentlichungsnummer: WO 2001/082240

(56) Entgegenhaltungen:
- WO-A-00/16271
- DE-A- 19 720 527
- US-A- 3 938 638
- US-A- 4 470 495
- US-A- 5 921 373

## Beschreibung

Die Erfindung betrifft ein Verfahren zum Erfassen und Belohnen einer Rückführung von Einkaufswagen in die dafür vorgesehenen Sammelstellen eines Einkaufsmarktes, wobei während des Einkaufs ein erstes Signal A und beim Zurückstellen eines Einkaufswagens in eine Sammelstelle ein zweites Signal B generiert wird, und wobei die beiden Signale A und B zur Ausgabe eines Bonus korreliert werden. Außerdem betrifft die Erfindung ein System zur Durchführung des Verfahrens, mit einer Anzahl von Einkaufswagen, mit mindestens einer Sammelstelle für die Einkaufswagen, mit ersten Erfassungsmitteln zum Generieren eines ersten Signals A während des Einkaufs und mit zweiten Erfassungsmitteln zum Generieren eines zweiten Signals B beim Zurückstellen eines Einkaufswagens in eine Sammelstelle, sowie mit einer Datenverarbeitungseinrichtung zum Korrelieren der beiden Signale A und B zur Ausgabe eines Bonus.

Einkaufsmärkte, die für einen Einkauf mit Selbstbedienung eingerichtet sind, sind in der Regel daran interessiert, dass die Kunden für den Einkauf einen Einkaufswagen benutzen. Dies erhöht die Bequemlichkeit für den Kunden, verringert die Gefahr einer Beschädigung der ausgesuchten Waren durch Herunterfallen und bietet vor allem einen gewissen Schutz vor bewußtem oder unbewußtem Ladendiebstahl. Solche Einkaufswagen werden den Kunden für die Dauer des Einkaufs zur Verfügung gestellt, wobei sie in der Regel in einer Sammelstelle vorgehalten und dort vom Kunden zum Einkauf entnommen werden. Nach dem Einkauf lassen die meisten Kunden den benutzten Einkaufswagen jedoch dort stehen, wo sie ihn entladen haben; also meist mitten auf dem Kundenparkplatz des Einkaufsmarktes. Dies führt zu ärgerlichen Behinderungen und teilweise auch zu Beschädigungen von Kundenfahrzeugen, so dass zusätzliches Personal notwendig ist, das die Einkaufswagen in regelmäßigen Abständen einsammelt und in die Sammelstellen bringt.

Um die Kunden dazu anzuhalten, den benutzten Einkaufswagen wieder in die Sammelstelle zurückzubringen und nicht einfach stehen zu lassen, hat sich in den letzten Jahren die Verwendung eines Pfandschloßsystems durchgesetzt: Der Kunde kann einen Einkaufswagen nur dann aus der Sammelstelle entnehmen, wenn er eine Pfandmünze in das Pfandschloss einsetzt, wodurch der Einkaufswagen freigegeben wird. Der Kunde erhält die Pfandmünze nur dann wieder, wenn er den Einkaufswagen in die Sammelstelle zurückbringt und dort ordentlich einstellt, d. h. normalerweise in eine Stapelreihe von Einkaufswagen einschiebt und an den unmittelbar benachbarten Einkaufswagen ankoppelt.

Das Pfandschloßsystem wird allerdings nicht von allen Kunden akzeptiert und als Gängelei empfunden. Außerdem werden teilweise billigste Plastikscheiben in die Pfandschlösser eingesetzt, die einer Pfandmünze nachgebildet sind, aber deren Funktion als Anreiz, den Einkaufswagen wieder ordentlich in die Sammelstelle zurückzustellen, naturgemäß nicht übernehmen. Außerdem will man normalerweise Vermeiden, einen Kunden vor dem Einkauf zu verärgern, was aber jedenfalls dann der Fall ist, wenn er einen Einkaufswagen benutzen will, aber keine passende Pfandmünze zur Hand hat.

Die WO 98/51197 beschreibt ein System, das diese nachteiligen Effekte eines Pfandschtößsystems zu vermeiden sucht: Es handelt sich um ein System zum Erfassen und Belohnen einer Rückführung von Einkaufswagen in die dafür vorgesehenen Sammelstellen eines Einkaufsmarktes, das pfandfrei durch elektronische Identifizierung der einzelnen Einkaufswagen und elektronische Erfassung von deren Weg ein erstes Signal A erzeugt, wenn ein bestimmter Einkaufswagen an der Kasse des Einkaufsmarktes vorbeigeführt und elektronisch erkannt wird. Ein zweites Signal B wird erzeugt, wenn derselbe Wagen in eine Sammelstelle eingestellt, dort ebenfalls elektronisch identifiziert und auf diese Art und Weise erkannt wird. Eine zentrale Datenverarbeitungseinrichtung erhält beide Signale A und B, korreliert diese und gibt einen Bonus aus. In der Regel wird der Bonus in Form eines Gutscheins ausgegeben; er kann aber auch auf einer Kundenkarte, die zu diesem Zweck eingelesen wird, gutgeschrieben werden.

Dieser Stand der Technik nach der WO 98/51197 vermeidet zwar die oben beschriebenen Nachteile des üblichen Pfandschloßsystems; dies wird aber mit einem erheblichen Aufwand erkauft, da jeder Einkaufswagen mit einer elektronischen Vorrichtung ausgerüstet werden muss, die drahtlos mit den jeweiligen Erfassungsmitteln zum Generieren der Signale A und B kommuniziert. Neben den Kosten, die hierbei für jeden Einkaufswagen zusätzlich anfallen, besteht die Gefahr einer Beschädigung der elektronischen Bauteile durch die nicht immer sanfte Behandlung von Einkaufswagen. Schließlich ist auch eine separate Energieversorgung, die wegen des mobilen Einsatzes aus Batterien mit entsprechendem Wartungsaufwand bestehen muss, für eine zuverlässige Funktion dieses bekannten Systems nicht zu vermeiden.

Die WO 00 16271 A offenbart ein System zum Belohnen des Zurückbringens von Einkaufswagen an eine Sammelstelle. Das Zurückbringen des Einkaufswagens an die Sammelstelle wird mittels eines induktiven Schleifensystems registriert. Anschliessend zieht der Kunde seine Kundenkarte durch das am Einkaufswagen installierte Lesegerät und initiiert somit die Gutschrift eines Bonus zugunsten seines Kundenkontos.

Der vorliegenden Erfindung liegt daher die Aufgabe zugrunde, ein Verfahren und ein System zum Erfassen und Belohnen einer Rückführung von Einkaufswagen der eingangs genannten Art hinsichtlich des Installations- und Wartungsaufwandes bei vergleichbar hohem Komfort für die Kunden zu verbessern.

Diese Aufgabe ist durch ein Verfahren mit den Merkmalen des Patentanspruchs 1 sowie durch ein System mit den Merkmalen des Patentansprüchs 16 gelöst.

Vorteilhafte Ausgestaltungen des Verfahrens ergeben sich aus den Ansprüchen 2 bis 15; vorteilhafte Weiterbildungen des erfindungsgemäßen Systems finden sich in den Ansprüchen 17 bis 28.

Erfindungsgemäß wird das Generieren des Signals A also an der Anwesenheit eines bestimmten Kunden im Einkaufsmarkt festgemacht; die Identifizierung eines Einkaufswagens mit den damit verbundenen Nachteilen kann völlig entfallen. Die bisher üblichen Einkaufswagen können unverändert weiter benutzt werden.

Die Anwesenheit eines Kunden im Einkaufsmarkt kann beispielsweise dadurch detektiert werden, dass der Kunde mittels optischer Erkennungssysteme oder durch Einlesen einer Kundenkarte beim Bezahlen an der Kasse des Einkaufsmarktes identifiziert wird - was im Sinne der Erfindung als Erkennen oder als Individualisieren zum Zweck eines Wiedererkennens zu verstehen ist; die tatsächliche Identität des Kunden muss hierbei nicht erfasst werden. Alternativ oder zusätzlich kann der Kunde an der Kasse einen Informationsträger, wie beispielsweise eine Art Pfandkarte erhalten, oder die Tatsache des Einkaufs wird auf einen kundeneigenen Datenträger geschrieben, so dass der Kunde das Signal A mit sich führt und beim Zurückstellen des Einkaufswagens mit dem Signal B korreliert. Letzteres hat den Vorteil, dass eine Identifizierung des Kunden nicht notwendig ist. Die erfindungsgemäße Zuordnung des ersten Signals A zu einem bestimmten Kunden kann schließlich auch dadurch vorgenommen werden, dass ein bestimmter Datenträger identifiziert oder mit dem Signal A beschrieben wird - unabhängig davon, ob dieser Datenträger von seinem Eigentümer mit sich geführt wird oder von einem beauftragten Dritten.

Der angesprochene kundeneigene Datenträger kann ein universell einsetzbarer elektronischer Datenträger sein. Es kann sich aber auch um eine herkömmliche Kundenkarte handeln, die mit einem vorzugsweise elektronischen Speichermedium versehen ist. Ferner ist es möglich, dass der kundeneigene Datenträger ein mobiles Telekommunikationsmittel ist, beispielsweise ein Mobiltelefon, das über das Mobilfunknetz oder direkt über eine Infrarotschnittstelle o. ä. mit dem Datenverarbeitungssystem des Einkaufsmarkts kommuniziert.

Mittels optischer Erkennungssysteme ist es auch möglich, das Signal A ganz ohne Informationsträger oder Datenaustausch am Kunden festzumachen: Beispielsweise wäre eine handelsübliche CCD-Kamera in der Lage, den Kunden beim Einkauf zu individualisieren und beim Zurückstellen des Einkaufswagens wiederzuerkennen.

Das erfindungsgemäße Prinzip, das Generieren des ersten Signals A an der Anwesenheit des Kunden festzumachen, kann mit den unterschiedlichsten Arten zum Generieren des zweiten Signals B kombiniert werden:

Es ist möglich, auch das Generieren des zweiten Signals B alleine an der Anwesenheit des Kunden in einer Einkaufswagen-Sammelstelle festzumachen, beispielsweise mittels der eben erwähnten optischen Erkennungssysteme. Hierbei kann vorgesehen sein, dass ein Kunde, der eingekauft hat, auch für das Zurückstellen eines von ihm nicht benutzten Einkaufswagens belohnt wird. Die Speicherung und Korrelation der beiden Signale A und B kann in einer zentralen Datenverarbeitungsanlage des Einkaufsmarktes gleich erfolgen oder bis zum nächsten Einkauf des Kunden gespeichert werden, um ihm dann einen Bonus gutzuschreiben. Dies wäre für den Kunden eine sehr bequeme Art der Belohnung einer Rückführung von Einkaufswagen, da er sich selbst um nichts kümmern muss und das Mitführen eines Informationsträgers oder gar einer Pfandmünze entfällt. Um dem Kunden eine Kontrolle der Bonusgutschrift zu ermöglichen, kann der Einkaufsmarkt oder die Sammelstelle mit einem Auslesegerät zum Abruf seines Bonuskontos versehen sein; es kann daneben auch vorgesehen sein, daß der Kunde sein Bonuskonto jederzeit online, beispielsweise über das Internet, abrufen kann.

Das Generieren des zweiten Signals B kann dagegen auch am Einkaufswagen festgemacht werden, wobei die Tatsache, dass ein Einkaufswagen in eine Sammelstelle eingestellt wird, das auslösende Ereignis für das Signal B ist. Soweit der Kunde einen Informationsträger mit sich führt, auf dem das erste Signal A vermerkt oder gespeichert ist, kann das zweite Signal B an der Sammelstelle an diesen Informationsträger ausgegeben und die beiden Signale A und B dort korreliert und bis zum nächsten Einkauf gespeichert werden. Hierzu könnte der Kunde beispielsweise eine Kundenkarte, eine spezielle Pfandkarte oder einen universell einsetzbaren Datenträger in ein Lese-Schreib-Gerät an der Sammelstelle einstecken, um entweder das Signal A auszulesen, mit dem Signal B zu korrelieren und in der zentralen Datenverarbeitungsanlage des Einkaufsmarktes zu speichern, oder aber das Signal B ebenfalls auf den Informationsträger zu schreiben. Letzteres hätte den Vorteil, dass der Kunde seinen Bonus, der sich aus der Korrelation der beiden Signale A und B ergibt, mitnehmen und sich gegebenenfalls auch in anderen Einkaufsmärkten gutschreiben lassen kann. Das Beschreiben eines solchen Informationsträgers mit dem zweiten Signal B kann selbstverständlich auch kontaktlos erfolgen. Vorteilhaft hierbei ist, wenn das Signal B nur dann generiert wird, wenn der Einkaufswagen tatsächlich ordnungsgemäß zurückgestellt, also in der Regel in eine Stapelreihe eingeschoben wird. Eine Prüfung des ordnungsgemäßen Abstellens kann beispielsweise durch eine CCD-Kamera vorgenommen werden, die anhand der Griffbügel der Einkaufswagen sowie deren Abstand und/oder deren Parallelität erkennt, ob die Stapelreihe ordnungsgemäß gebildet wird, die Abstände also innerhalb vorgegebener Toleranzen liegen. Hierdurch kann sichergestellt werden, dass die Einkaufswagen zur Ausgabe des begehrten Bonus nicht nur irgendwie in die Sammelstelle eingestellt, sondern dort ordnungsgemäß in einer Stapelreihe abgestellt werden.

Ebenso ist vorstellbar und von der Erfindung umfasst, dass der Kunde beim Einkauf identifiziert oder individualisiert und das Signal A beispielsweise an der Kasse dem Einkaufswagen aufgegeben wird. Dies kann das Beschreiben eines am Einkaufswagen befestigten Datenträgers umfassen; es ist aber auch möglich, den Einkaufswagen nur zu identifizieren, beispielsweise über einen Barcode, um diesem das Signal A "mitzugeben". In dem Moment, in dem der das Signal A tragende Einkaufswagen in die Sammelstelle zurückgestellt wird, kann in einer zentralen Datenverarbeitungsanlage des Einkaufsmarktes dem beim Generieren des Signals A identifizierten oder individualisierten Kunden ein Bonus gutgeschrieben werden.

Wie zuvor bereits erwähnt, kann das Generieren des zweiten Signals B beim Zurückstellen irgendeines Einkaufswagens in eine Sammelstelle erfolgen, um auch das Zurückstellen von fremden, stehengelassenen Einkaufswagen zu belohnen. Hierbei ist es sinnvoll, wenn die zweiten Erfassungsmittel für das Generieren des zweiten Signals B nicht nur das Zurückstellen eines Einkaufswagens, sondern auch dessen Entnahme aus der Sammelstelle detektieren und für das Generieren des zweiten Signals B berücksichtigen, wie lange der jeweilige Einkaufswagen außerhalb einer Sammelstelle war; so kann verhindert werden, dass ein Bonus dadurch erschlichen wird, dass ein Einkaufswagen aus der Sammelstelle entnommen und gleich wieder zurückgestellt wird. Alternativ oder in Kombination hierzu kann für das Generieren des zweiten Signals B berücksichtigt werden, ob mit dem zurückgestellten Einkaufswagen zuvor eingekauft wurde. Dies setzt voraus, dass die Entnahme des Einkaufswagens aus der Sammelstelle und/oder die Anwesenheit des Einkaufswagens im Einkaufsmarkt detektiert wird, beispielsweise indem der Wagen beim Entnehmen aus der Sammelstelle und/oder beim Bezahlen an der Kasse "markiert" oder jeweils identifiziert wird, beispielsweise mittels eines Barcodes, der von optischen Erkennungssystemen gelesen werden kann.

Ein besonders einfaches Beispiel für die Anwendung der Erfindung besteht darin, dass beim Bezahlen im Einkaufsmarkt ein Informationsträger für das erste Signal A an den Kunden ausgegeben und auf diesem beim Zurückstellen eines Einkaufswagens das zweite Signal B vermerkt wird, wobei der Kunde bei Rückgabe des Informationsträgers mit vermerktem zweiten Signal B einen Bonus erhält. Dieser Informationsträger kann eine übliche Chipkarte sein; aber auch eine Karte mit optisch auslesbarem Aufdruck oder mit veränderlicher Farbbeschichtung ist denkbar. Der Informationsträger kann beispielsweise dadurch mit dem zweiten Signal B beaufschlagt werden, dass er in ein mit den bekannten Pfandschlössern ähnliches Gerät am Einkaufswagen eingesteckt wird und das Signal B erhält, sobald der Einkaufswagen ordnungsgemäß in der Sammelstelle abgestellt, also in die Stapelreihe eingeschoben wurde.

Der Informationsträger kann beispielsweise auch eine Parkkarte sein, die bei der Einfahrt in den Parkplatz des Einkaufsmarktes an den Kunden ausgegeben wird und bei der Ausfahrt aus dem Parkplatz wieder zurückgegeben werden muss. Diese Parkkarte kann dann beim Einkauf an der Kasse mit Signal A codiert werden, wobei sie beim ordnungsgemäßen Zurückstellen des Einkaufswagens in die Sammelstelle das Signal B erhält. Beim Ausfahren aus dem Kundenparkplatz erkennt der die Ausfahrt freigebende Wächter oder Automat, dass die Parkkarte mit den Signalen A und B codiert ist und gibt hierbei einen Bonus aus. Das System funktioniert auf dieselbe Art und Weise auch dann, wenn zum Ein- und Ausfahren aus dem Kundenparkplatz keine separate Parkkarte gezogen, sondern ein kundeneigener Datenträger, insbesondere eine Chipkarte/Kreditkarte verwendet wird. Da diese Karte den Kunden gleichzeitig individualisiert, müssen die Signale A und B nicht unbedingt auf dieser Karte gespeichert werden, um beim Ausfahren aus dem Parkplatz einen Bonus zu erhalten; die Datenverarbeitungsanlage des Einkaufsmarktes kann diesen Kunden beim Bezahlen, beim Zurückstellen des Einkaufswagens und beim Ausfahren aus dem Kundenparkplatz anhand seiner Karte jeweils erkennen. Wenn der Kunde mit dieser ebengenannten Karte seinen Einkauf bargeldlos bezahlt, kann der Bonus außerdem gleich von dem Geldbetrag, der dem Kunden bargeldlos belastet wird, abgezogen werden. Alternativ ist es auch vorstellbar, dass der Kunde nur dann keine Gebühr für die Benutzung des Kundenparkplatzes entrichten muss, wenn er einen Einkaufswagen ordnungsgemäß in die Sammelstelle zurückgestellt hat. Der für das Zurückstellen eines Einkaufswagens ausgegebene Bonus kann selbstverständlich auch ein Gutschein sein, den der Kunde beim nächsten Einkauf wieder mitbringt.

Besonders vorteilhaft läßt sich die Erfindung realisieren, wenn ein kundeneigener Datenträger mit einbezogen wird. Da sich zur Zeit ein plattformübergreifender Standard für elektronische, kontaktlos auszulesende und zu beschreibende Datenträger zu entwickeln scheint, ist davon auszugehen, dass mittelfristig auch jeder Kunde eines Einkaufsmarktes einen solchen Datenträger mit sich führt. Für eine Übergangszeit kann ein Einkaufsmarkt oder eine Einkaufsmarktkette auch spezielle Datenträger für das Bonussystem ausgeben. Wenn die Signale A und B nicht in einer Datenverarbeitungsanlage des Einkaufsmarktes, sondern auf dem kundeneigenen Datenträger gespeichert und/oder verknüpft werden, kann der Kunde den Bonus mitnehmen und sich in einem anderen Markt derselben Kette gutschreiben lassen. Zweckmäßigerweise werden die Signale A und B jeweils zusammen mit einer Zeitinformation auf dem kundeneigenen Datenträger gespeichert, um den Bonus nur dann ausgeben zu müssen, wenn ein zeitlicher Zusammenhang zwischen dem ersten Signal A für den Einkauf und dem zweiten Signal B für das Zurückstellen irgendeines Einkaufswagens in irgendeine Sammelstelle besteht.

Zur Vorsorge gegen Manipulationen am kundeneigenen Datenträger können die darauf abgelegten Signale A und B zusätzlich auch zeitnah zu deren Generierung in einem markteigenen Speicher, insbesondere einer zentralen Datenverarbeitungsanlage, abgelegt werden, gegebenenfalls auch stichprobenweise.

Das erfindungsgemäße System kann so ausgelegt sein, dass es je nach Bedarf und örtlichen Gegebenheiten hinsichtlich der Generierung und Speicherung der Signale A und B jederzeit umprogrammierbar ist. Die Speicherung kann beispielsweise nur im kundeneigenen Datenträger, oder nur im markteigenen Zentralrechner, oder in beiden Speichern erfolgen; im Rahmen dieser Programmierbarkeit kann auch vorgesehen sein, dass der markteigene Zentralrechner zum Zweck der Bonusübertragung auf andere Einkaufsmärkte mit deren Zentralrechnern kommuniziert.

Der kundeneigene Datenträger kann selbstverständlich auch ein mobiles Telekommunikationsmittel, beispielsweise ein handelsübliches Mobiltelefon sein. Dies hat mehrere Vorteile: Insbesondere ein Mobiltelefon kann über das Mobilfunknetz telefonisch mit der Datenverarbeitungsanlage des Einkaufsmarktes kommunizieren, wobei der Kunde anhand seines Mobiltelefons automatisch individualisiert wird. Aber auch eine direkte Kommunikation beispielsweise eines Mobiltelefons mit Infrarotschnittstelle zwischen diesem und der Datenverarbeitungsanlage des Einkaufsmarktes ist denkbar. Auch hier steht die Kommunikationstechnologie bereits zur Verfügung; das Mobiltelefon individualisiert sich hierbei über die Gerätenummer, was seinerseits den Vorteil hat, dass der Kunde mit genau diesem Mobiltelefon zwar sicher wieder erkannt werden kann, wenn er seinen Einkaufswagen bzw. irgendeinen Einkaufswagen in die Sammelstelle zurückstellt, gleichzeitig jedoch kein Rückschtuss auf die Identität des Kunden wie über die Mobüfunktelefonnummer möglich ist. Auf der anderen Seite gibt es bereits Bezahlsysteme, die die Individualisierung eines Kunden über sein Mobiltelefon dazu verwenden, einen bargeldlosen Bezahlvorgang über das Eintippen einer entsprechenden PIN-Zahl in das Mobiltelefon an der Kasse des Einkaufsmarktes zu bewirken. Mit diesem System ist das erfindungsgemäße Verfahren hervorragend kombinierbar: Wenn der Kunde mit Hilfe seines Mobiltelefons an der Kasse des Einkaufsmarktes bezahlt hat, muss dieses Mobiltelefon nur noch beim Zurückstellen des Einkaufswagens wieder erkannt werden, um die Herausgabe eines Bonus auszulösen. Dieser kann dann wahlweise auch gleich von dem Geldbetrag abgezogen werden, der dem Kunden im bargeldlosen Zahlungsverkehr für den Einkauf belastet wird.

Schließlich kann der an den Kunden auszugebende Bonus zusätzlich in Abhängigkeit von Daten über den Umfang, die Zusammensetzung und/oder den Zeitpunkt des Einkaufs ermittelt werden. Hierdurch wird es möglich, beispielsweise ausgewählte Produkte zu promoten oder eine Art Mengenrabatt auszugeben. Ferner könnte über die zeitinformationsabängige Bonusermittlung belohnt werden, dass der Einkauf außerhalb von Spitzenbelastungszeiten erfolgt: Ein gleichmäßigerer Kundenfluß würde beispielsweise in einem Supermarkt die Reduzierung der Kassenanzahl und der benötigten Arbeitskräfte ermöglichen.

Wenn die Erfassungsmittel des Systems aufgeteilt werden und jeweils ein Teil, nämlich ein Signalgeber, im Einkaufsmarkt oder an der Sammelstelle angeordnet ist und ein anderer Teil der Erfassungsmittel, nämlich ein optischer Detektor, an den Einkaufswagen angebracht ist, benötigt man keine markteigene Datenverarbeitungsanlage, die mit den ersten und den zweiten Erfassungsmitteln in Verbindung steht: Das Zusammenwirken des optischen Detektors eines Einkaufswagens mit dem optischen Signalgeber im Einkaufsmarkt generiert das Signal A, das vom Kunden mitgenommen werden kann, bevorzugterweise durch das unmittelbare Beschreiben eines kundeneigenen Datenträgers mit dem Signal A. Ein derartiger Einkaufswagen kann dann beim Erhalt des Lichtsignals des zweiten optischen Signalgebers in der Sammelstelle das Signal B generieren und ebenfalls an einen kundeneigenen Datenträger ausgeben. Der kundeneigene Datenträger kann hierbei beispielsweise eine Chipkarte sein, die in ein Schreib-Lese-Gerät am Einkaufswagen oder an der Sammelstelle eingesteckt wird. Es kann sich aber auch um einen universell einsetzbaren Datenträger handeln, der kontaktlos mit den Signalen A und B beaufschlagt wird. Die hierbei verwendeten optischen Signalgeber arbeiten vorzugsweise im Infrarot-Bereich und damit für den Kunden unsichtbar. Alternativ ist es mit besonders wenig Aufwand und dennoch hoher Zuverlässigkeit verbunden, wenn der optische Signalgeber im Einkaufsmarkt und/oder der optische Signalgeber in der Sammelstelle durch Modulieren der gewöhnlichen, ohnehin vorhandenen Beleuchtung gebildet wird. Das aufmodulierte Lichtsignal kann dann insbesondere das Generieren der Signale A und B in einem am Einkaufswagen angebrachten Detektor auslösen.

Es sei angemerkt, dass in einem Einkaufsmarkt selbstverständlich auch eine Kombination der verschiedenen Möglichkeiten für die Verwirklichung der Erfindung vorhanden sein kann. Da nicht jeder Kunde beispielsweise mit einem Mobiltelefon ausgestattet ist, ist es vorteilhaft, wenn das erfindungsgemäße System beispielsweise sowohl eine Kommunikation mit einem kundeneigenen Mobiltelefon durchführen kann als auch mit einem vom Einkaufsmarkt an den Kunden ausgegebenen Informationsträger funktioniert.

Ein Ausführungsbeispiel für ein erfindungsgemäßes System wird im folgenden anhand der beigefügten Zeichnungen näher erläutert. Es zeigen:
- Figur 1: das Generieren des ersten Signals A;
- Figur 2: das Generieren des zweiten Signals B;
- Figur 3a, 3b, 3c, 3d: Beispiele für einen kundeneigenen Datenträger;
- Figur 4: ein alternatives Generieren des ersten Signals A;
- Figur 5: ein alternatives Generieren des zweiten Signals B;
- Figur 6: eine schematischen Detaildarstellung des Griffsbereichs eines Einkaufswagens.

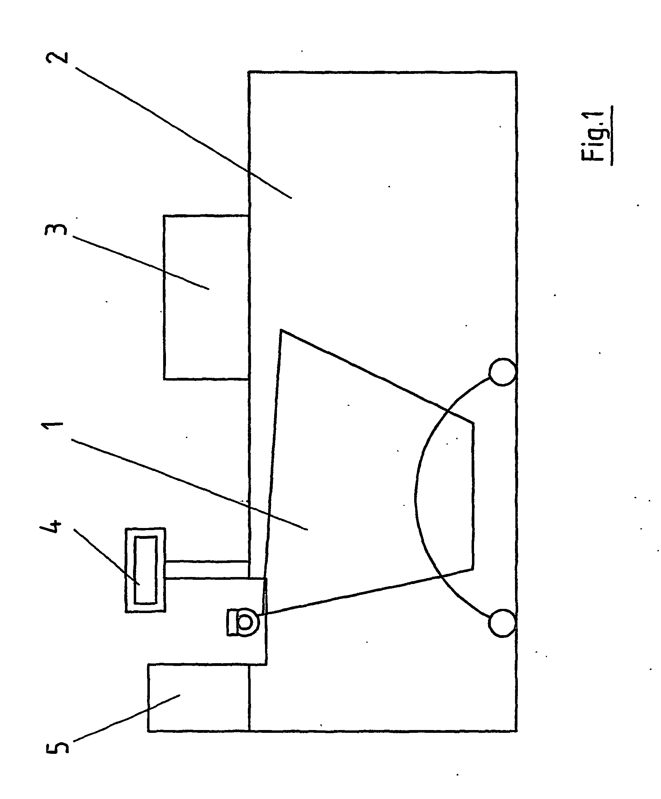

Figur 1 zeigt in einer schematischen Darstellung einen Einkaufswagen 1 an einer Kasse 2 eines Einkaufsmarktes. Die Kasse ist in üblicher Weise mit einem Scanner 3 und einer Anzeige 4 versehen. Ein erstes Erfassungsmittel 5 ist dazu vorgesehen, das Passieren einer mit einem Transponder versehenen (nicht dargestellten) Identifikationskarte eines (ebenfalls nicht dargestellten) Kunden zu detektieren, mit von der Kasse 2 erhaltenen Daten über den getätigten Einkauf zu verknüpfen und als Signal A an eine zentrale Datenverarbeitungsanlage des Einkaufsmarktes weiterzugeben.

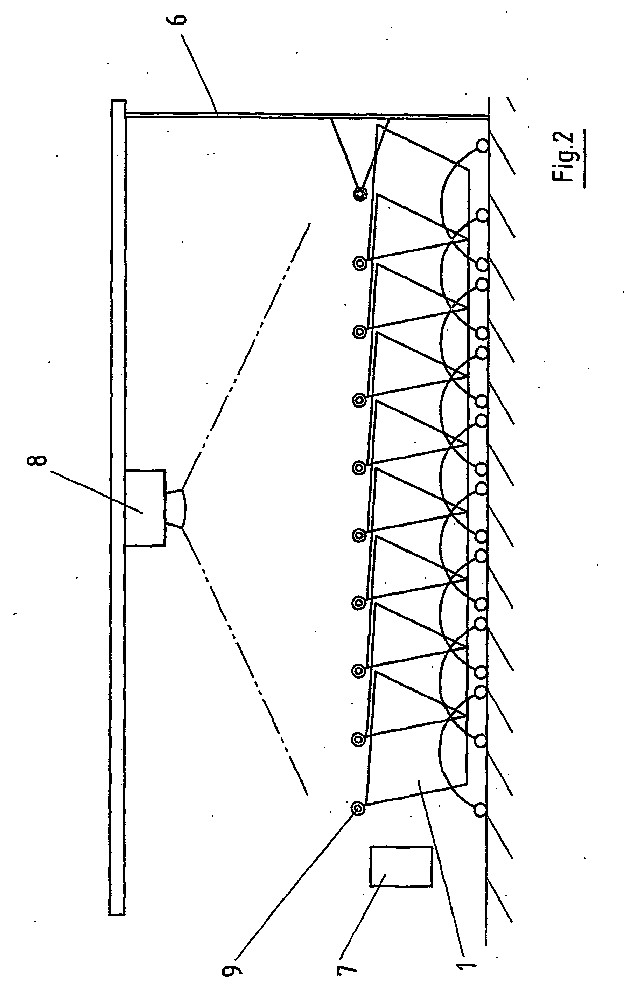

Figur 2 zeigt schematisch eine Sammelstelle 6 mit einer angedeuteten Stapelreihe von Einkaufswagen 1. Im Eingangsbereich der Sammelstelle 6 sind zweite Erfassungsmittel 7 vorgesehen, die wie die ersten Erfassungsmittel 5 an der Kasse 3 die Anwesenheit einer Kundenidentifikationskarte registrieren. Eine im Dachbereich der Sammelstelle 6 angeordnete CCD-Kamera 8 überwacht das ordnungsgemäße Einstellen eines Einkaufswagens 1 in die Stapelreihe, indem der Griff 9 eines neu hinzugekommenen Einkaufswagens 1 in Abstand und Orientierung mit den Griffen der anderen Einkaufswagen abgeglichen wird. Liegen die Daten über Orientierung und Abstand innerhalb der vorgegebenen Toleranzen, generiert das zweite Erfassungsmittel 7 das zweite Signal B und sendet dieses wiederum an die zentrale Datenverarbeitungsanlage des Einkaufsmarktes. Dort wird ein Bonus ermittelt und bis zum nächsten Einkauf des Kunden mit der betreffenden Identifikationskarte gespeichert.

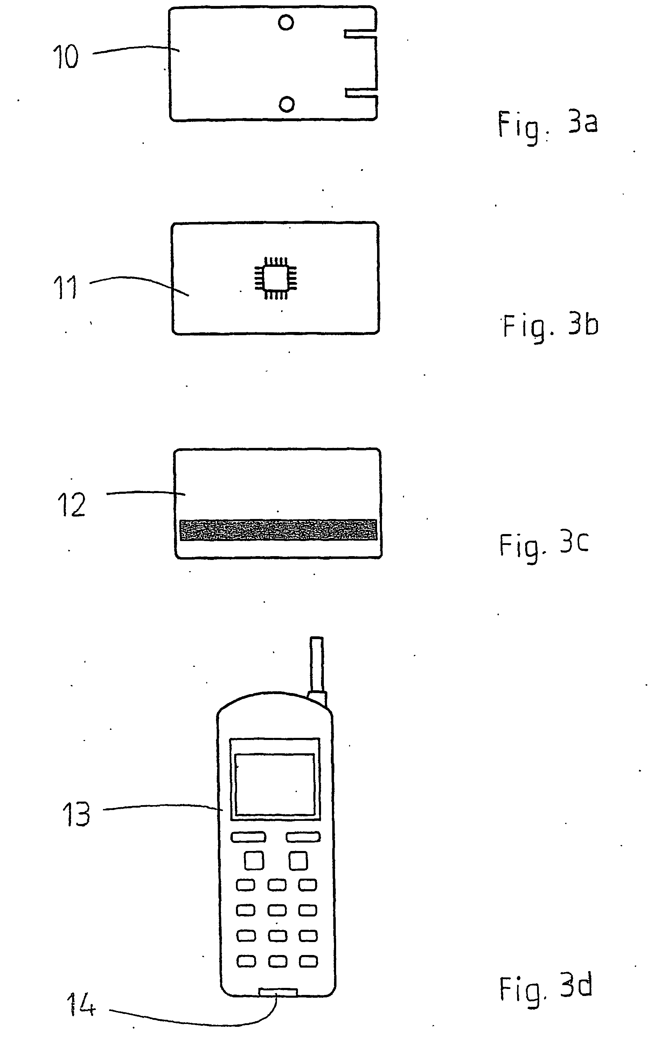

Die Figuren 3a, 3b, 3c und 3d zeigen verschiedene Beispiele für einen kundeneigenen Datenträger, auf den die Signale A und B geschrieben werden können, oder mit denen sich der Kunde im Einkaufsmarkt identifizieren kann.

Figur 3a zeigt eine als Lochkarte 10 ausgebildete Pfandkarte, die der Kunde als Signal A beim Bezahlen an der Kasse des Einkaufsmarktes oder schon beim Einfahren auf den Kundenparkplatz erhält und bis zur Sammelstelle für die Einkaufswagen mit sich führt. Die Sammelstelle kann dann solcher Art ausgebildet sein, dass die Lochkarte 10 in ein Bonusausgabegerät eingesteckt und dann der Einkaufswagen ordnungsgemäß in der Sammelstelle abgestellt wird, worauf das Bonusausgabegerät die Lochkarte 10 einzieht und stattdessen eine Gutschrift ausgibt. Alternativ kann die Lochkarte 10 auch mit einer Kennung versehen und zur Ausfahrt aus dem Kundenparkplatz wieder ausgegeben werden.

Figur 3b zeigt eine Chipkarte 11, während in Figur 3c eine Magnetstreifenkarte 12 abgebildet ist. Diese beiden Karten können entweder lediglich als Kundenidentifikationskarten dienen, wobei insbesondere die Chipkarte 11 mit einem Transponder zur kontaktlosen Identifikation versehen sein kann, während die Magnetstreifenkarte 12 in der Regel durch einen Kartenleser gezogen werden muss; beide Karten 11 und 12 können jedoch auch mit Informationen, insbesondere mit dem Signal A und/oder dem Signal B beschrieben werden.

Figur 3d schließlich zeigt ein Mobiltelefon 13, das als kundeneigener Datenträger fungiert und über eine Infrarot-Schnittstelle 14 oder über das Mobilfunknetz mit der zentralen Datenverarbeitungsanlage des Einkaufsmarktes kommunizieren kann und hierdurch den Kunden für die Generierung der Signale A und B sowie für die Gutschrift des Bonus individualisiert. Die Signale A und B werden selbstverständlich bevorzugt automatisch und drahtlos generiert; technisch äußert unaufwendig wäre es jedoch beispielsweise, wenn die Signale A und B aus einer Zahlenfolge bestehen, die dem Kunden an der Kasse bzw. in der Sammelstelle mitgeteilt wird und von diesem über die Tastatur des Mobiltelefons eingegeben werden muss.

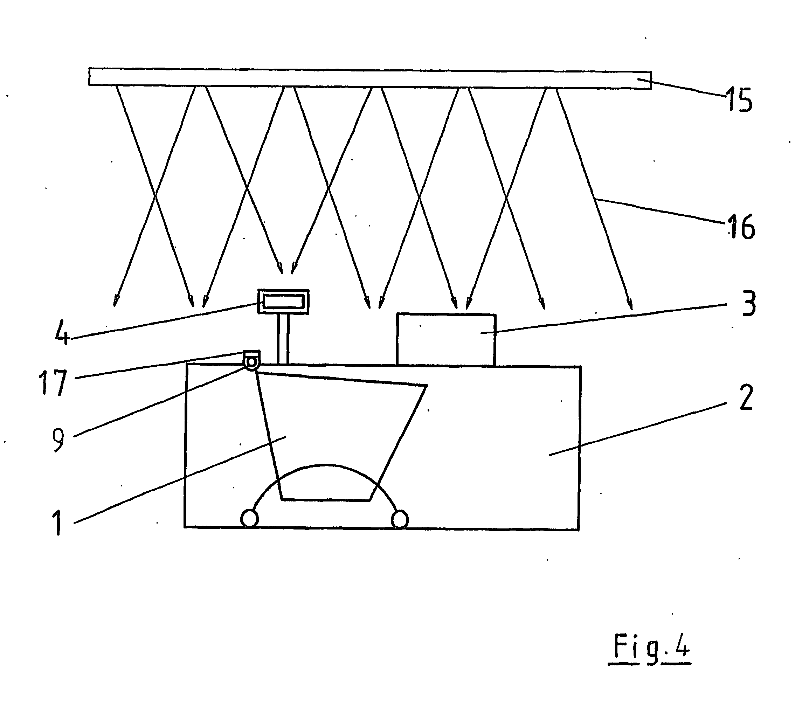

Figur 4 zeigt in einer schematischen Darstellung ein anderes Ausführungsbeispiel der Erfindung in einer Darstellung gemäß Figur 1. Gleiche Bestandteile sind mit den gleichen Bezugszeichen versehen. Im Unterschied zu dem in Figur 1 beschriebenen Ausführungsbeispiel ist oberhalb des Kassenbereichs ein erster Signalgeber 15 angeordnet, der ein erstes Lichtsignal 16 im Infrarot-Bereich aussendet. Dieses erste Lichtsignal 16 trifft auf einen Detektor 17, der am Griff 9 des Einkaufswagens 1 angebracht ist. Der Detektor 17 erkennt am ersten Lichtsignal 16, dass der Einkaufswagen 1 sich im Kassenbereich befindet und dementsprechend ein Einkauf stattfindet. Er generiert deshalb das Signal A und leitet dieses an eine Kundenkarte weiter.

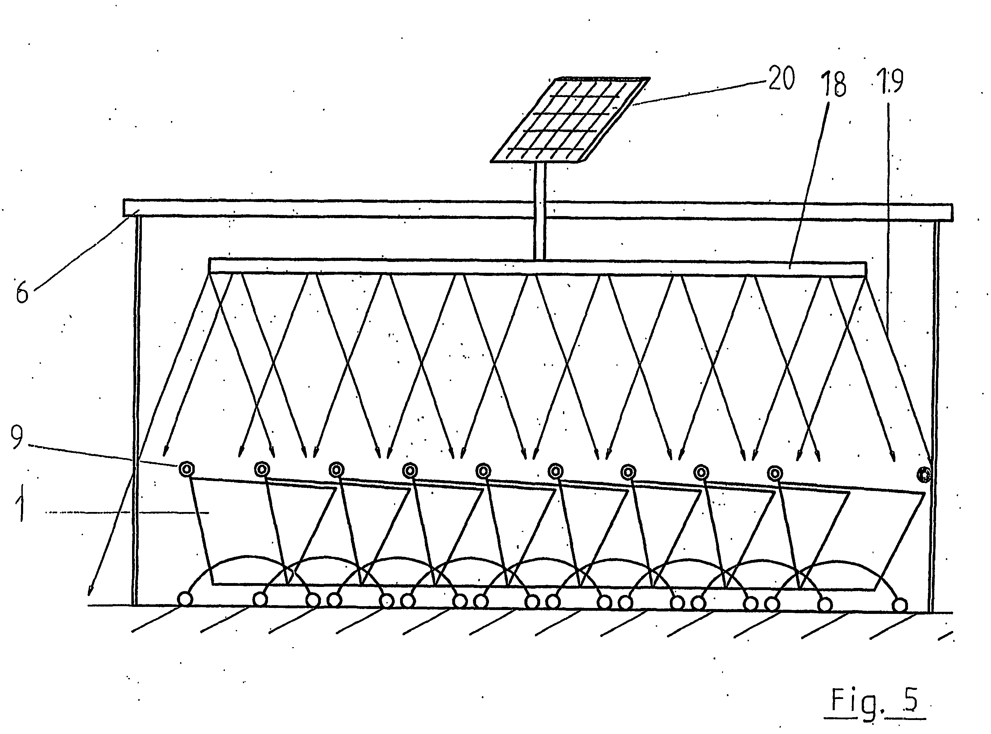

Figur 5 zeigt schematisch eine Sammelstelle 6 mit einer Stapelreihe von Einkaufswagen 1, in die der mit dem Signal A versehene Einkaufswagen 1 in der in Figur 4 gezeigten Ausgestaltung eingestellt werden soll. Oberhalb der Stapelreihe von Einkaufswagen 1 ist ein zweiter Signalgeber 18 angeordnet, der entsprechend dem ersten Signalgeber 15 ausgestaltet ist und ein zweites Lichtsignal 19 zu den Griffen 9 der Einkaufswagen 1 sendet. Zur Stromversorgung dieses zweiten Signalgebers 18 ist ein Solarmodul 20 auf dem Dach der Sammelstelle 6 vorgesehen. Wird nun der Einkaufswagen 1 in einer in Figur 4 gezeigten Ausgestaltung in die Sammelstelle 6 eingestellt, erhält der Detektor 17, der das Signal A mit sich führt, das zweite Lichtsignal 19, erkennt daran, dass der Einkaufswagen 1 ordnungsgemäß in eine Sammelstelle 6 eingestellt wurde und generiert das Signal B zur Weiterleitung an eine Kundenkarte.

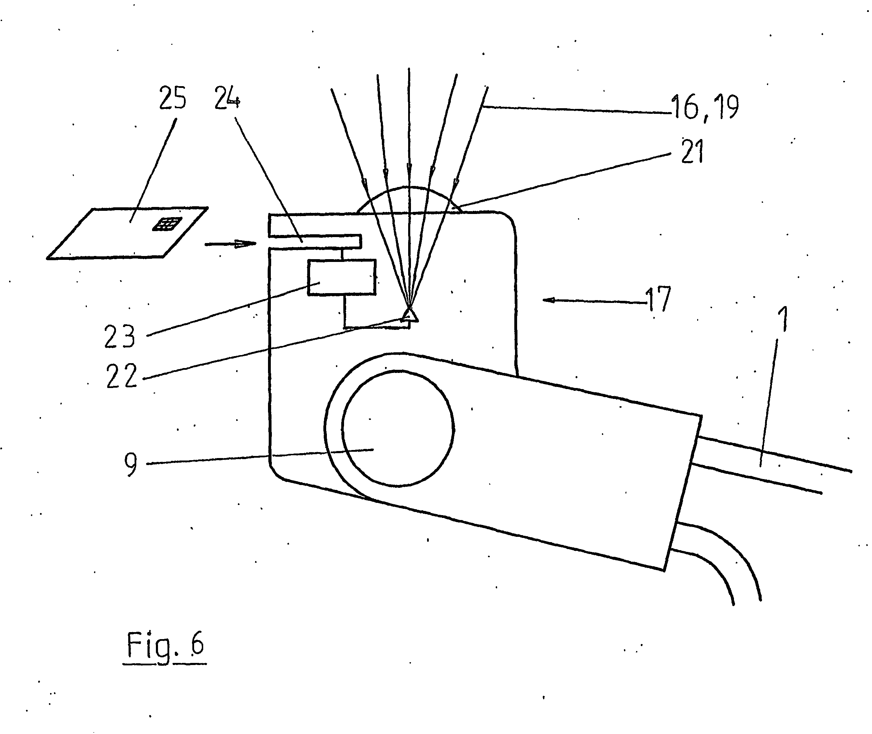

Figur 6 zeigt in einer schematischen Darstellung die Funktionsweise des Detektors 17 am Griff 9 des Einkaufswagens 1 in der in den Figuren 4 und 5 gezeigten Ausgestaltung genauer: Das erste Lichtsignal 16 oder das zweite Lichtsignal 19 trifft auf eine Sammellinse 21 des Detektors 17 und wird von dieser auf eine Fotodiode 22 gelenkt. Die Fotodiode 22 arbeitet mit einer Auswerteelektronik 23 zusammen und erkennt, ob es sich um das erste Lichtsignal 16 oder das zweite Lichtsignal 19 handelt. Die Auswerteelektronik 23 generiert das Signal A bzw. das Signal B zur Weitergabe an eine Kundenkarte. In ein Schreib-Lese-Gerät 24 des Detektors 17 kann eine Chipkarte 25 des Kunden gesteckt werden, auf welche die Signale A und B geschrieben werden. Die Korrelation der Signale A und B erfolgt später beim Auslesen der Chipkarte 25. Nach erfolgtem Beschreiben der Chipkarte 25, das beispielsweise durch ein kurzes akustisches Signal angezeigt werden kann, kann diese vom Kunden wieder entnommen werden. Bei Vorlage der Chipkarte 25 mit den Signalen A und B erhält der Kunde eine Gutschrift als Bonus für das ordnungsgemäße Zurückstellen des Einkaufswagens 1 in die Sammelstelle 6.

### Bezugszeichenliste

- 1: Einkaufswagen
- 2: Kasse
- 3: Scanner
- 4: Anzeige
- 5: Erfassungsmittel (erste)
- 6: Sammelstelle
- 7: Erfassungsmittel (zweite)
- 8: CCD-Kamera
- 9: Griff (von 1)
- 10: Lochkarte
- 11: Chipkarte
- 12: Magnetstreifenkarte
- 13: Mobiltelefon
- 14: Infrarot-Schnittstelle
- 15: Signalgeber (erster)
- 16: Lichtsignal (erstes)
- 17: Detektor
- 18: Signalgeber (zweiter)
- 19: Lichtsignal (zweites)
- 20: Solarmodul
- 21: Sammellinse
- 22: Fotodiode
- 23: Auswerteelektronik
- 24: Schreib-Lese-Gerät
- 25: Chipkarte

## Patentansprüche

1. Verfahren zum Erfassen und Belohnen einer Rückführung von Einkaufswagen in die dafür vorgesehenen Sammelstellen eines Einkaufsmarktes,
wobei ein erstes Signal A und beim Zurückstellen eines Einkaufswagens in die Sammlestelle ein zweites Signal B generiert wird,
und wobei die beiden Signale A und B zur Ausgabe eines Bonus korreliert werden
**dadurch gekennzeichnet, dass**
das erste Signal A während des Einkaufes generiert wird,
das erste Signal A einem bestimmten Kunden zugeordnet wird, indem der Kunde vor dem Generieren des ersten Signals A identifiziert oder individualisiert wird
und/oder indem der Kunde das generierte Signal A bis zur Korrelation mit dem zweiten Signal B auf einem Informationsträger mit sich führt.

2. Verfahren nach Anspruch 1,
**dadurch gekennzeichnet,**
**dass** das zweite Signal B beim Zurückstellen irgend eines Einkaufswagens in eine Sammelstelle generiert wird.

3. Verfahren nach Anspruch 2,
**dadurch gekennzeichnet,**
**dass** das zweite Signal B nur dann generiert wird, wenn sich der zurückgestellte Einkaufswagen zuvor länger als eine voreingestellte Zeitdauer außerhalb einer Sammelstelle befand.

4. Verfahren nach einem der Ansprüche 2 oder 3,
**dadurch gekennzeichnet,**
**dass** das zweite Signal B nur dann generiert wird, wenn mit dem zurückgestellten Einkaufswagen zuvor eingekauft wurde.

5. Verfahren nach Anspruch 4,
**dadurch gekennzeichnet,**
**dass** sich der Kunde im Einkaufsmarkt zum Generieren des ersten Signals A identifiziert oder individualisiert, dass gleichzeitig die Identität des beim Einkauf benutzten Einkaufswagens erkannt oder der Einkaufswagen mit dem ersten Signal A beaufschlagt wird, und dass das zweite Signal B generiert wird, wenn der beim Einkauf benutzte Einkaufswagen zurückgestellt wird, wobei die Korrelation der Signale A und B im Einkaufsmarkt erfolgt und dem Kunden auf einem individuellen Konto gutgeschrieben wird.

6. Verfahren nach einem der Ansprüche 1 bis 4,
**dadurch gekennzeichnet,**
**dass** der Kunde zum Generieren des Signals A mittels optischer Erkennungssysteme individualisiert wird.

7. Verfahren nach Anspruch 6,
**dadurch gekennzeichnet,**
**dass** der Kunde zum Generieren des Signals B mittels optischer Erkennungssysteme wiedererkannt wird.

8. Verfahren nach einem der Ansprüche 1 bis 4,
**dadurch gekennzeichnet,**
**dass** der Informationsträger für das erste Signal A beim Bezahlen im Einkaufsmarkt an den Kunden ausgegeben und auf diesem beim Zurückstellen eines Einkaufswagens das zweite Signal B vermerkt wird, wobei der Kunde bei Rückgabe des Informationsträgers mit vermerktem zweiten Signal B einen Bonus erhält.

9. Verfahren nach einem der Ansprüche 1 bis 4,
**dadurch gekennzeichnet,**
**dass** der Informationsträger beim Einfahren des Kunden auf einen Kundenparkplatz des Einkaufsmarktes an den Kunden ausgegeben, beim Bezahlen im Einkaufsmarkt das erste Signal A und beim Zurückstellen eines Einkaufswagens das zweite Signal B vermerkt wird, wobei der Kunde bei Rückgabe des Informationsträgers beim Ausfahren aus dem Kundenparkplatz einen Bonus erhält, wenn das erste Signal A und das zweite Signal B auf dem Informationsträger vermerkt sind.

10. Verfahren nach einem der Ansprüche 1 bis 4 oder 6 bis 7,
**dadurch gekennzeichnet,**
**dass** die Signale A und B auf einem kundeneigenen Datenträger gespeichert werden.

11. Verfahren nach Anspruch 10,
**dadurch gekennzeichnet,**
**dass** die Signale A und B in dem kundeneigenen Datenträger verknüpft werden.

12. Verfahren nach Anspruch 10,
**dadurch gekennzeichnet,**
**dass** die Signale A und B jeweils zusammen mit einer Zeitinformation auf dem kundeneigenen Datenträger gespeichert, beim nächsten Einkauf ausgelesen und zur Ausgabe eines Bonus im Einkaufsmarkt korreliert werden.

13. Verfahren nach einem der Ansprüche 10 bis 12,
**dadurch gekennzeichnet,**
**dass** die Signale A und B mit einkaufsmarktspezifischer Kodierung oder Adressierung auf dem kundeneigenen Datenträger gespeichert werden.

14. Verfahren nach einem der Ansprüche 10 bis 13,
**dadurch gekennzeichnet,**
**dass** die Signale A und B außerdem im Einkaufsmarkt gespeichert werden.

15. Verfahren nach einem der Ansprüche 1 bis 14,
**dadurch gekennzeichnet,**
**dass** das erste Signal A neben der Information, dass ein Einkauf stattgefunden hat, auch Daten über den Umfang, die Zusammensetzung und/oder den Zeitpunkt des Einkaufs enthält, und der an den Kunden auszugebende Bonus in Abhängigkeit von diesen Daten ermittelt wird.

16. System zur Durchführung des Verfahrens nach einem der Ansprüche 1 bis 15 mit ersten Erfassungsmitteln zum Generieren eines ersten Signals A während des Einkaufs und mit zweiten Erfassungsmitteln zum Generieren eines zweiten Signals B beim Zurückstellen eines Einkaufswagens in eine Sammelstelle und mit einer Datenverarbeitungseinrichtung zum Korrelieren der beiden Signale A und B zur Ausgabe eines Bonus, wobei
die ersten Erfassungsmittel so ausgestaltet sind, dass sie vor dem Generieren des ersten Signals A einen Bestimmten Kunden oder einen von diesem mitgeführten Informationsträger identifizieren oder individualisieren.

17. System nach Anspruch 16,
**dadurch gekennzeichnet, dass**
ein von einem Kunden mit sich geführter Informationsträger zum Speichern des ersten Signals A bis zu dessen Korrelation mit dem zweiten Signal B vorgesehen ist.

18. System nach Anspruch 16,
**dadurch gekennzeichnet,**
**dass** die ersten Erfassungsmittel (5) mit einem optischen Erkennungssystem zur Identifizierung oder Individualisierung eines bestimmten Kunden versehen sind.

19. System nach Anspruch 18,
**dadurch gekennzeichnet,**
**dass** die zweiten Erfassungsmittel (7) mit einem optischen Erkennungssystem zur Identifizierung oder Individualisierung eines bestimmten Kunden versehen sind.

20. System nach Anspruch 16 und/oder 17,
**dadurch gekennzeichnet,**
**dass** der Informationsträger ein im dauernden Besitz des Kunden befindlicher Datenträger ist.

21. System nach Anspruch 16 und/oder 17,
**dadurch gekennzeichnet,**
**dass** der Informationsträger ein kundeneigenes mobiles Telekommunikätionsmittel, insbesondere ein mobiles Telefon (13) ist.

22. System nach Anspruch 16 und/oder 17,
**dadurch gekennzeichnet,**
**dass** die zweiten Erfassungsmittel (18) so ausgestaltet sind, dass sie erkennen, ob der zurückgestellte Einkaufswagen (1) innerhalb einer vorgegebenen Toleranz in die in der Sammelstelle (6) vorgesehene Einkaufswagen-Stapelreihe eingestellt ist.

23. System nach Anspruch 17,
**dadurch gekennzeichnet,**
**dass** die ersten Erfassungsmittel (5) einen ersten optischen Signalgeber (15) im Einkaufsmarkt und die zweiten Erfassungsmittel einen zweiten optischen Signalgeber (18) an der Sammelstelle (6) umfassen und eine Anzahl von mit den ersten und den zweiten Signalgebern (15, 18) zusammenwirkenden optischen Detektoren (17) aufweisen, die an den Einkaufswagen (1) angebracht sind und für das Generieren der Signale A und B sowie für das Weiterleiten dieser Signale A und B an einen kundeneigenen Datenträger vorgesehen sind.

24. System nach Anspruch 23,
**dadurch gekennzeichnet,**
**dass** die optischen Detektoren (17) mit einem Schreib-Lese-Gerät (24) zum Beschreiben eines als Chipkarte (25) ausgebildeten, kundeneigenen Datenträgers versehen sind.

25. System nach Anspruch 23,
**dadurch gekennzeichnet,**
**dass** ein kontaktloses Weiterleiten der Signale A und B an den kundeneigenen Datenträger vorgesehen ist.

26. System nach einem der Ansprüche 23 bis 25,
**dadurch gekennzeichnet,**
**dass** die ersten und/oder die zweiten optischen Signalgeber (15, 18) aus IR-Lichtquellen gebildet sind.

27. System nach einem der Ansprüche 23 bis 25,
**dadurch gekennzeichnet,**
**dass** der erste optische Signalgeber (15) durch ein auf die gewöhnliche Beleuchtüng des Einkaufsmarktes aufmoduliertes Lichtsignal (16) gebildet ist.

28. System nach einem der Ansprüche 23 bis 25 oder 27,
**dadurch gekennzeichnet,**
**dass** der zweite optische Signalgeber (18) durch ein auf die gewöhnliche Beleuchtung der Sammelstelle (6) aufmoduliertes Lichtsignal (19) gebildet ist.

## Claims

1. Method for recording of and reward for the return of shopping trolleys to the collection points which are provided for this purpose at a shopping centre,
with a first signal A being generated, and a second signal B being generated when a shopping trolley is returned to the collection point,
and with the two signals A and B being correlated in order to issue a bonus,
**characterized in that**
the first signal A is generated while shopping,
the first signal A is allocated to a specific customer by identification or individualization of the customer before the generation of the first signal A,
and/or by the generated signal A being carried on an information storage medium by the customer until it is correlated with the second signal B.

2. Method according to Claim 1,
**characterized**
**in that** the second signal B is generated when any shopping trolley is returned to a collection point.

3. Method according to Claim 2,
**characterized**
**in that** the second signal B is generated only when the returned shopping trolley has been located outside a collection point for more than a preset time period.

4. Method according to one of Claims 2 or 3,
**characterized**
**in that** the second signal B is generated only when the returned shopping trolley has previously been used for shopping.

5. Method according to Claim 4,
**characterized**
**in that** the customer is identified or individualized in the shopping centre for generation of the first signal A, in that the identity of the shopping trolley which is being used for shopping is identified or the first signal A is applied to that shopping trolley at the same time, and in that the second signal B is generated when the shopping trolley which has been used for shopping is returned, with the signals A and B being correlated in the shopping centre and being credited to the customer on an individual account.

6. Method according to one of Claims 1 to 4,
**characterized**
**in that** the customer is individualized by means of optical recognition systems for generation of the signal A.

7. Method according to Claim 6,
**characterized**
**in that** the customer is re-identified by means of optical recognition systems for generation of the signal B.

8. Method according to one of Claims 1 to 4,
**characterized**
**in that** the information storage medium for the first signal A is issued to the customer on payment in the shopping centre, and the second signal B is noted on this information storage medium when a shopping trolley is returned, with the customer receiving a bonus on return of the information storage medium with the second signal B noted on it.

9. Method according to one of Claims 1 to 4, **characterized in that** the information storage medium is issued to the customer when the customer drives into a customer car park at the shopping centre, the first signal A is noted on it on payment in the shopping centre and the second signal B is noted on it on returning a shopping trolley, with the customer receiving a bonus on returning the information storage medium when driving out of the customer car park, provided that the first signal A and the second signal B have been noted on the information storage medium.

10. Method according to one of Claims 1 to 4 or 6 to 7,
**characterized**
**in that** the signals A and B are stored on the customer's own data storage medium.

11. Method according to Claim 10,
**characterized**
**in that** the signals A and B are linked in the customer's own data storage medium.

12. Method according to Claim 10,
**characterized**
**in that** the signals A and B are each stored together with time information on the customer's own data storage medium, are read when the customer next goes shopping and are correlated in the shopping centre in order to issue a bonus.

13. Method according to one of Claims 10 to 12,
**characterized**
**in that** the signals A and B are stored together with a coding or address which is specific to that shopping centre, on the customer's own data storage medium.

14. Method according to one of Claims 10 to 13,
**characterized**
**in that** the signals A and B are also stored in the shopping centre.

15. Method according to one of Claims 1 to 14,
**characterized**
**in that** the first signal A contains not only the information that a purchase has been made but also data about the scope, the composition and/or the time of the purchase, and the bonus to be issued to the customer is determined as a function of this data.

16. System for carrying out the method according to one of Claims 1 to 15 having first recording means for generation of a first signal A while shopping and having second recording means for generation of a second signal B on returning a shopping trolley to a collection point, and having a data processing device for correlation of the two signals A and B in order to issue a bonus, with
the first recording means being designed such that it identifies or individualizes a specific customer or an information storage medium carried by this customer, before generation of the first signal A.

17. System according to Claim 16,
**characterized**
**in that** an information storage medium which is carried by a customer is intended for storage of the first signal A until it is correlated with the second signal B.

18. System according to Claim 16,
**characterized**
**in that** the first recording means (5) is provided with an optical recognition system for identification or individualization of a specific customer.

19. System according to Claim 18,
**characterized**
**in that** the second recording means (7) is provided with an optical recognition system for identification or individualization of a specific customer.

20. System according to Claim 16 and/or 17,
**characterized**
**in that** the information storage medium is a data storage medium which is held permanently by the customer.

21. System according to Claim 16 and/or 17,
**characterized**
**in that** the information storage medium is the customer's own mobile telecommunications means, in particular a mobile telephone (13).

22. System according to Claim 16 and/or 17,
**characterized**
**in that** the second recording means (18) is designed such that it recognizes whether the returned shopping trolley (1) has been positioned within a predetermined tolerance in the shopping trolley stacking row provided in the collection point (6).

23. System according to Claim 17,
**characterized**
**in that** the first recording means (5) has a first optical signal transmitter (15) in the shopping centre, and the second recording means has a second optical signal transmitter (18) at the collection point (6) and has a number of optical detectors (17) which interact with the first and the second signal transmitters (15, 18), are fitted to the shopping trolley (1), and are intended for the generation of the signals A and B and for passing on these signals A and B to the customer's own data storage medium.

24. System according to Claim 23,
**characterized**
**in that** the optical detectors (17) are provided with a reader/writer (24) for writing to the customer's own data storage medium, which is in the form of a smart card (25).

25. System according to Claim 23,
**characterized**
**in that** the signals A and B are passed on to the customer's own data storage medium without any contact being made.

26. System according to one of Claims 23 to 25,
**characterized**
**in that** the first and/or the second optical signal transmitters/transmitter (15, 18) are formed from IR light sources.

27. System according to one of Claims 23 to 25,
**characterized**
**in that** the first optical signal transmitter (15) is formed by a light signal (16) which is modulated onto the conventional lighting at the shopping centre.

28. System according to one of Claims 23 to 25 or 27,
**characterized**
**in that** the second optical signal transmitter (18) is formed by a light signal (19) which is modulated onto the conventional lighting at the collection point (6).

## Revendications

1. Procédé pour détecter et récompenser un retour de chariots dans les points de collecte prévus à cet effet d'un supermarché, un premier signal A étant généré et un deuxième signal B lors de la remise en place d'un chariot dans le point de collecte et les deux signaux A et B étant corrélés pour la délivrance d'un bonus, **caractérisé en ce que** le premier signal A est généré pendant les achats, le premier signal A est affecté à un client donné **en ce que** le client est identifié ou individualisé avant de générer le premier signal A et/ou **en ce que** le client emporte avec lui le signal A généré sur un support d'informations jusqu'à la corrélation avec le deuxième signal B.

2. Procédé selon la revendication 1, **caractérisé en ce que** le deuxième signal B est généré lors de la remise en place d'un chariot quelconque dans un point de collecte.

3. Procédé selon la revendication 2, **caractérisé en ce que** le deuxième signal B n'est généré que lorsque le chariot remis en place se trouvait préalablement en-dehors d'un point de collecte plus longtemps qu'une durée prédéfinie.

4. Procédé selon l'une des revendications 2 ou 3, **caractérisé en ce que** le deuxième signal B n'est généré que si des achats ont préalablement été effectués avec le chariot remis en place.

5. Procédé selon la revendication 4, **caractérisé en ce que** le client s'identifie ou s'individualise dans le supermarché pour générer le premier signal A, qu'au même moment est détectée l'identité du chariot utilisé lors des achats ou alors le chariot est exposé au premier signal A, et que le deuxième signal B est généré lorsque le chariot utilisé lors des achats est remis en place, la corrélation des signaux A et B s'effectuant dans le supermarché et étant imputée au client sur un compte individuel.

6. Procédé selon l'une des revendications 1 à 4, **caractérisé en ce que** le client est individualisé au moyen de systèmes de reconnaissance optique en vue de générer le signal A.

7. Procédé selon la revendication 6, **caractérisé en ce que** le client est de nouveau reconnu au moyen de systèmes de reconnaissance optique en vue de générer le signal B.

8. Procédé selon l'une des revendications 1 à 4, **caractérisé en ce que** le support d'informations pour le premier signal A est délivré au client lors du paiement dans le supermarché et le deuxième signal B est marqué sur celui-ci lors de la remise en place d'un chariot, le client recevant un bonus en rendant le support d'informations sur lequel est marqué le deuxième signal B.

9. Procédé selon l'une des revendications 1 à 4, **caractérisé en ce que** le support d'informations est délivré au client lorsque le client pénètre sur un parking pour clients du supermarché, le premier signal A est marqué lors du paiement dans le supermarché et le deuxième signal B est marqué lors de la remise en place d'un chariot, le client recevant un bonus en rendant le support d'informations en sortant du parking pour clients si le premier signal A et la deuxième signal B sont marqués sur le support d'informations.

10. Procédé selon l'une des revendications 1 à 4 ou 6 à 7, **caractérisé en ce que** les signaux A et B sont enregistrés sur un support de données propre au client.

11. Procédé selon la revendication 10, **caractérisé en ce que** les signaux A et B sont combinés dans le support de données propre au client.

12. Procédé selon la revendication 10, **caractérisé en ce que** les signaux A et B sont à chaque fois enregistrés sur le support de données propre au client en même temps qu'une information temporelle, sont lus lors du prochain achat et son corrélés en vue de la délivrance d'un bonus dans le supermarché.

13. Procédé selon l'une des revendications 10 à 12, **caractérisé en ce que** les signaux A et B sont enregistrés sur le support de données propre au client avec un codage ou un adressage spécifique au supermarché.

14. Procédé selon l'une des revendications 10 à 13, **caractérisé en ce que** les signaux A et B sont également enregistrés dans le supermarché.

15. Procédé selon l'une des revendications 1 à 14, **caractérisé en ce que** le premier signal A, outre l'information selon laquelle un achat a eu lieu, contient également des informations sur la nature, la composition et/ou le moment de l'achat et le bonus à délivrer au client est déterminé en fonction de ces données.

16. Système pour mettre en oeuvre le procédé selon l'une des revendications 1 à 15, comprenant des premiers moyens de détection pour générer un premier signal A pendant les achats et comprenant des deuxièmes moyens de détection pour générer un deuxième signal B lors de la remise en place d'un chariot dans un point de collecte et comprenant un dispositif de traitement de données pour corréler les deux signaux A et B en vue de délivrer un bonus, les premiers moyens de détection étant configurés de telle sorte qu'ils identifient ou individualisent un client donné ou un support d'informations emporté par celui-ci avant de générer le premier signal A.

17. Système selon la revendication 16, **caractérisé en ce qu'**il est prévu un support d'informations emporté par le client pour enregistrer le premier signal A jusqu'à sa corrélation avec le deuxième signal B.

18. Système selon la revendication 16, **caractérisé en ce que** les premiers moyens de détection (5) sont munis d'un système de reconnaissance optique pour identifier ou individualiser un client donné.

19. Système selon la revendication 18, **caractérisé en ce que** les deuxièmes moyens de détection (7) sont munis d'un système de reconnaissance optique pour identifier ou individualiser un client donné.

20. Système selon la revendication 16 et/ou 17, **caractérisé en ce que** le support d'informations est un support de données qui se trouve en possession permanente du client.

21. Système selon la revendication 16 et/ou 17, **caractérisé en ce que** le support d'informations est un moyen de télécommunication mobile propre au client, notamment un téléphone mobile (13).

22. Système selon la revendication 16 et/ou 17, **caractérisé en ce que** les deuxièmes moyens de détection (18) sont configurés de telle sorte qu'ils détectent si le chariot (1) remis en place est placé dans une tolérance prédéfinie dans la rangée de chariots prévue dans le point de collecte (6).

23. Système selon la revendication 17, **caractérisé en ce que** les premiers moyens de détection (5) comprennent un premier générateur de signal optique (15) dans le supermarché et les deuxièmes moyens de détection un deuxième générateur de signal optique (18) au point de collecte (6) et présentent un certain nombre de détecteurs optiques (17) agissant conjointement avec les premier et deuxième générateurs de signal (15, 18), lesquels sont montés sur les chariots (1) et sont prévus pour générer les signaux A et B ainsi que pour transmettre ces signaux A et B à un support de données propre au client.

24. Système selon la revendication 23, **caractérisé en ce que** les détecteurs optiques (17) sont munis d'un appareil de lecture/écriture (24) pour écrire sur un support de données propre au client réalisé sous la forme d'une carte à puce (25).

25. Système selon la revendication 23, **caractérisé en ce qu'**il est prévu une transmission sans contact des signaux A et B au support de données propre au client.

26. Système selon l'une des revendications 23 à 25; **caractérisé en ce que** le premier et/ou le deuxième générateurs de signal optique (15, 18) sont réalisés à partir de sources de lumière infrarouge.

27. Système selon l'une des revendications 23 à 25, **caractérisé en ce que** le premier générateur de signal optique (15) est formé par un signal lumineux (16) superposé par modulation à l'éclairage habituel du supermarché.

28. Système selon l'une des revendications 23 à 25 ou 27, **caractérisé en ce que** le deuxième générateur de signal optique (18) est formé par un signal lumineux (19) superposé par modulation à l'éclairage habituel du point de collecte (6).
